# FASCICULE DE BREVET EUROPEEN

(11) **EP 4 133 203 B1**
(45) Date de publication et mention de la délivrance du brevet: **12.06.2024**
(21) Numéro de dépôt: 21720808.1
(22) Date de dépôt: 26.03.2021
(51) Int. Cl.: F16L 41/00, G01D 11/30, G01L 19/00

(54) **CONNECTEUR FLUIDIQUE MUNI D'UN CAPTEUR DE PRESSION**
FLUIDISCHER VERBINDER MIT EINEM DRUCKSENSOR
FLUIDIC CONNECTOR PROVIDED WITH A PRESSURE SENSOR

(30) Priorité: 06.04.2020 FR 2003418
(43) Date de publication de la demande: 15.02.2023
(73) Titulaire: A. Raymond et Cie, 38000 Grenoble (FR)
(72) Inventeur: MBAYE, Mansour, 38430 MOIRANS (FR); FERRAND, Emile, 38130 ECHIROLLES (FR)
(74) Mandataire: IP Trust
(86) Numéro de dépôt international: PCT/FR2021/050542
(87) Numéro de publication internationale: WO 2021/205093

(56) Documents cités:
- CN-U- 205 877 527
- US-A1- 2012 285 571

## Description

### DOMAINE DE L'INVENTION

La présente invention concerne le domaine des raccords et connecteurs pour permettre une communication fluidique entre des tuyaux ou conduits, notamment pour les véhicules automobiles. Elle concerne en particulier un connecteur fluidique équipé d'un capteur pour mesurer des propriétés du fluide circulant dans le conduit interne dudit connecteur, par exemple la pression.

### ARRIERE PLAN TECHNOLOGIQUE DE L'INVENTION

Les connecteurs fluidiques pour l'automobile sont très largement utilisés pour raccorder des tuyaux flexibles à des tubes rigides sur différentes lignes de fluide d'un véhicule. De tels connecteurs sont notamment employés sur les lignes de fluides liquide ou vapeur que comprend le système de carburant. L'évolution du diagnostic et du contrôle du fonctionnement des moteurs de véhicules modernes accentue les besoins de surveillance des conditions de fonctionnement dans le système de carburant, en particulier la surveillance de la pression du fluide. Il est donc souhaitable de disposer de connecteurs fluidiques munis de capteurs de pression sensibles et robustes, compatibles avec cet environnement.

On connaît le document EP1967782 qui propose un connecteur fluidique rapide intégrant une chambre sur sa paroi cylindrique externe pour loger un capteur de pression. Le capteur communique avec le conduit interne du connecteur. La chambre est fermée par un couvercle. Un inconvénient de cette approche est que la formation de la chambre, qui nécessite d'élever des cloisons au-dessus de la paroi externe du connecteur, augmente significativement l'encombrement du connecteur fluidique. De plus, le connecteur électrique étant surmoulé avec le conduit, cette approche ne confère aucune modularité au connecteur fluidique. On connaît également le document US2012/285571 qui décrit un connecteur fluidique rapide muni d'un capteur, par exemple de pression. Le connecteur comprend un corps dans lequel un fluide va circuler, une base support disposée sur ce corps et un élément de fixation collé sur la base support. La compacité et la robustesse de ce type de connecteur restent encore à améliorer. Le document CN205877527 propose une autre solution de connecteur rapide muni d'un capteur.

### OBJET DE L'INVENTION

La présente invention propose une solution alternative à celles de l'état de la technique, qui vise à résoudre tout ou partie des inconvénients précités. L'invention concerne en particulier un connecteur fluidique compact, robuste, modulaire et muni d'un capteur de pression.

### BREVE DESCRIPTION DE L'INVENTION

L'invention concerne un connecteur fluidique comprenant :
- un corps de forme générale cylindrique, présentant deux embouts de connexion fluidique et définissant un conduit interne dans lequel un fluide est destiné à circuler,
- une interface d'assemblage aménagée sur et dans le corps, comprenant un orifice mettant en communication le conduit interne et l'extérieur du corps, une première zone d'accueil s'étendant autour de l'orifice, une deuxième zone d'accueil s'étendant autour de la première zone d'accueil, et des régions de fixation,
- un capteur de pression comprenant un cylindre de liaison disposé dans ou en vis-à-vis de l'orifice, le capteur de pression établissant un contact avec la première zone d'accueil par l'intermédiaire d'un premier joint d'étanchéité, pour assurer une étanchéité entre le conduit interne et l'extérieur du corps,

- un capot disposé sur le capteur de pression et établissant un contact avec la deuxième zone d'accueil par l'intermédiaire d'un deuxième joint d'étanchéité pour isoler le capteur de pression de l'environnement extérieur, le capot comprenant en outre un embout de connexion électrique pour raccorder le capteur de pression, et deux ailes latérales s'étendant au moins en partie autour du corps pour coopérer avec les régions de fixation et permettre l'assemblage du capot sur le corps, les deux ailes latérales étant configurées de sorte que le capot chevauche le corps ;
- un élément élastique disposé entre le capot et une face du capteur de pression, l'autre face du capteur de pression étant en contact avec le corps, un unique contact entre le capot et le capteur étant établi via l'élément élastique.

Selon d'autres caractéristiques avantageuses et non limitatives de l'invention, prises seules ou selon toute combinaison techniquement réalisable :
- la première zone d'accueil comprend un logement coaxial à l'orifice et le cylindre de liaison forme une protubérance qui s'étend dans le logement, le premier joint d'étanchéité étant placé dans le logement et autour de la protubérance pour assurer une étanchéité radiale entre le conduit interne et l'extérieur du corps ;
- la première zone d'accueil comprend un évasement conique en continuité de l'orifice et le capteur de pression comporte un épaulement, le premier joint d'étanchéité étant placé dans l'évasement conique et contre l'épaulement pour assurer une étanchéité entre le conduit interne et l'extérieur du corps ;
- le capteur de pression comporte un épaulement, le premier joint d'étanchéité étant placé contre l'épaulement et comprimé par le capteur de pression pour assurer une étanchéité axiale entre le conduit interne et l'extérieur du corps ;
- au moins un des embouts de connexion fluidique est un embout de connexion rapide ;
- le cylindre de liaison du capteur de pression forme une protubérance qui s'étend dans l'orifice, affleurant le conduit interne ou dépassant sensiblement dans celui-ci ;
- le premier et/ou le deuxième joint d'étanchéité présente(nt) une forme annulaire configurée pour réduire les efforts de compression lors de l'assemblage du capot sur le corps ;
- la forme annulaire du joint présente une section dont une portion centrale est amincie ;
- les deux ailes latérales sont clipsées, collées ou soudées sur les régions de fixation ;
- chaque aile latérale comporte au moins une dent à son extrémité et chaque région de fixation comporte au moins une rainure pour permettre le clipsage de l'une sur l'autre ;
- la dent de chaque aile latérale présente un profil progressif et/ou chaque aile latérale présente une bordure inclinée à son extrémité, pour permettre un clipsage progressif du capot sur le corps ;
- le deuxième joint d'étanchéité comprend une bande de matière adhésive lorsque les deux ailes latérales sont collées sur les régions de fixation, ou un cordon de soudure lorsque les deux ailes latérales sont soudées sur les régions de fixation ;
- le capot et l'interface d'assemblage présentent une forme symétrique par rapport à un plan longitudinal passant par un axe central du conduit interne et par un centre de l'orifice ;
- le corps présente une région de rétrécissement du diamètre au niveau de l'un des embouts de connexion fluidique, et le capot comprend une aile transverse prenant appui sur la région de rétrécissement ;
- le capteur de pression comprend des bornes de connexion électrique reliées à des broches débouchant dans l'embout de connexion électrique ;
- les broches sont surmoulées ou montées en force dans le capot ;
- la liaison entre les bornes de connexion électrique et les broches est assurée par des contacts à ressort ;
- les bornes de connexion électrique sont soudées sur les broches ;
- l'élément élastique est formé d'un ressort ou d'un matériau élastomère ;
- l'élément élastique est surmoulé sur le capot ou sur le corps, ou rapporté contre le capot ou contre le corps ;
- l'interface d'assemblage comprend des ergots de centrage pour positionner le capteur de pression et/ou le capot sur le corps ;
- le capteur de pression est solidarisé au capot ou au corps.

### BREVE DESCRIPTION DES FIGURES

D'autres caractéristiques et avantages de l'invention ressortiront de la description détaillée de l'invention qui va suivre en référence aux figures annexées sur lesquelles :
[Fig. 1a]
[Fig. 1b]
[Fig. 1c]
[Fig. 1d]

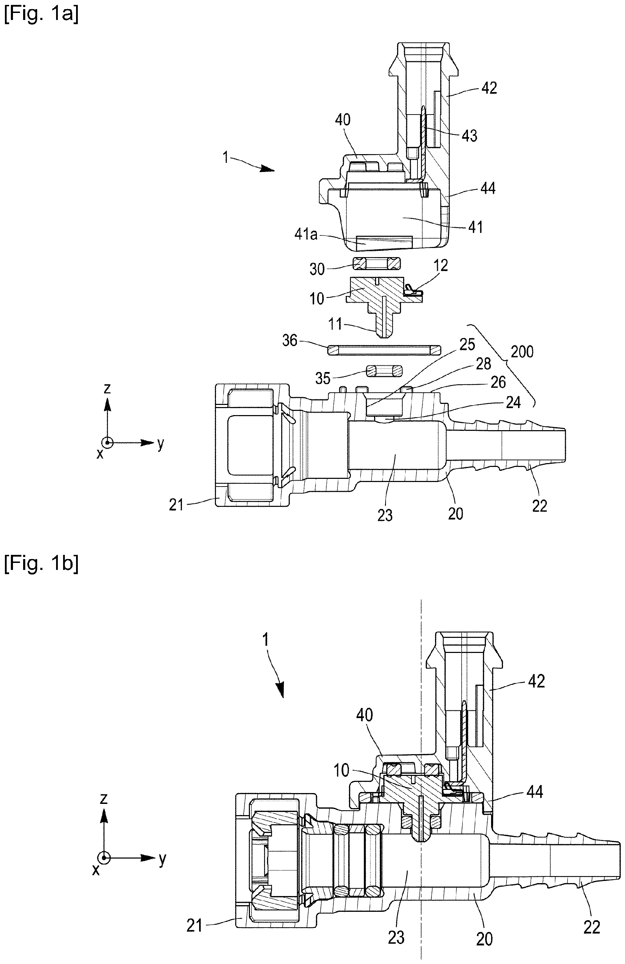

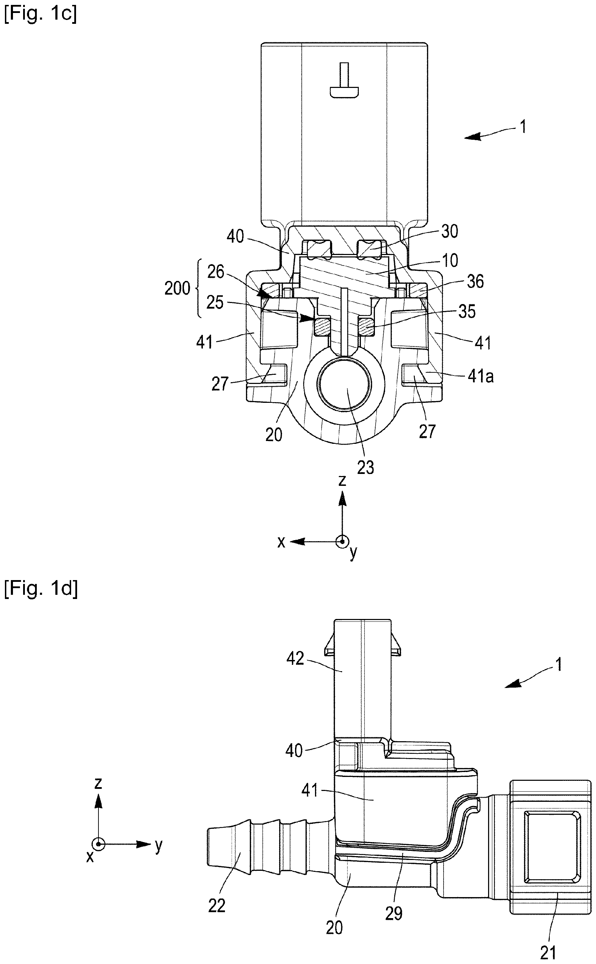

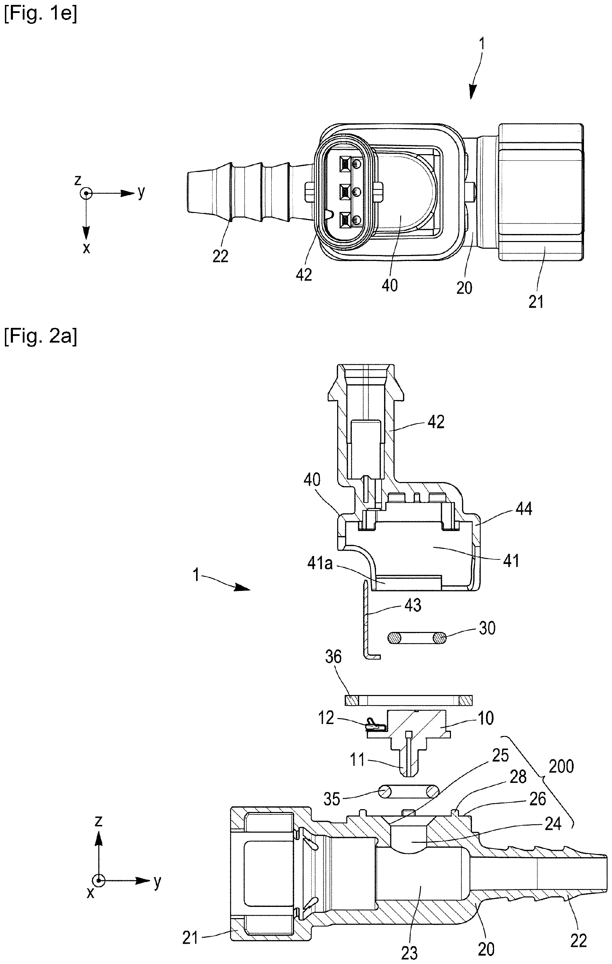

[Fig. 1e] Les figures 1a, 1b, 1c, 1d et 1e présentent un connecteur fluidique muni d'un capteur de pression, conforme à un premier mode de réalisation de la présente invention, respectivement en vue éclatée (fig.1a), en coupe selon un plan longitudinal (y,z) (fig.1b), en coupe selon un plan transversal (x,z) (fig.1c), en vue de côté (fig. 1d) et en vue de dessus (fig.1e) ;
[Fig. 2a]
[Fig. 2b]

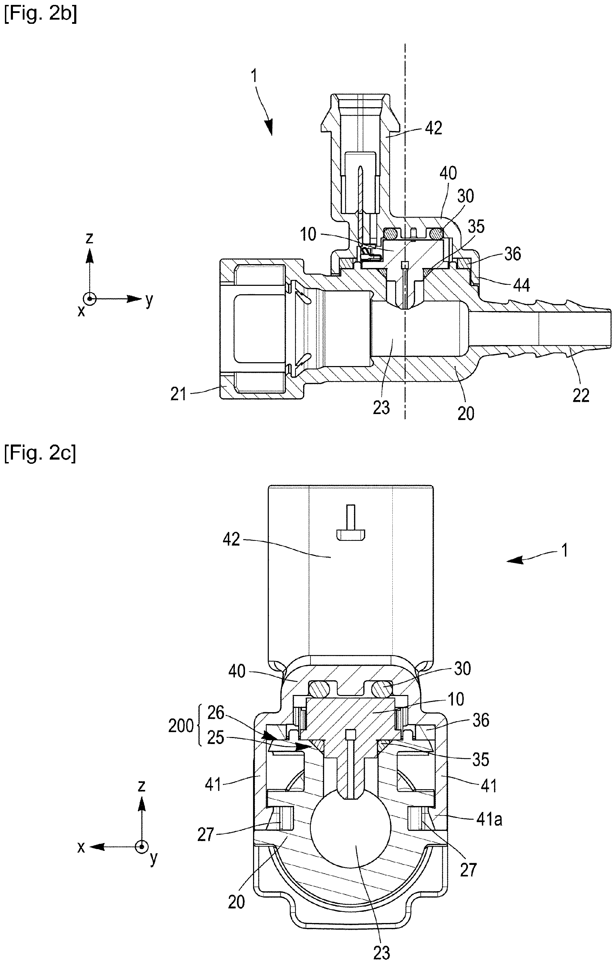

[Fig. 2c] Les figures 2a, 2b et 2c présentent un connecteur fluidique muni d'un capteur de pression, conforme à un deuxième mode de réalisation de la présente invention, respectivement en vue éclatée (fig.2a), en coupe selon un plan longitudinal (y,z) (fig.2b), en coupe selon un plan transversal (x,z) (fig.2c);
[Fig. 3a]
[Fig. 3b]

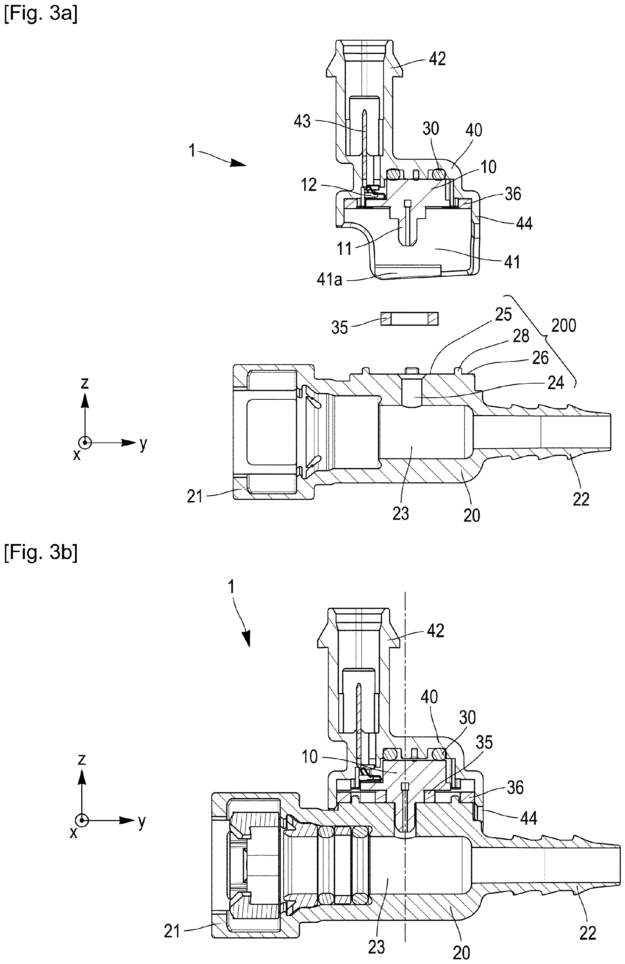

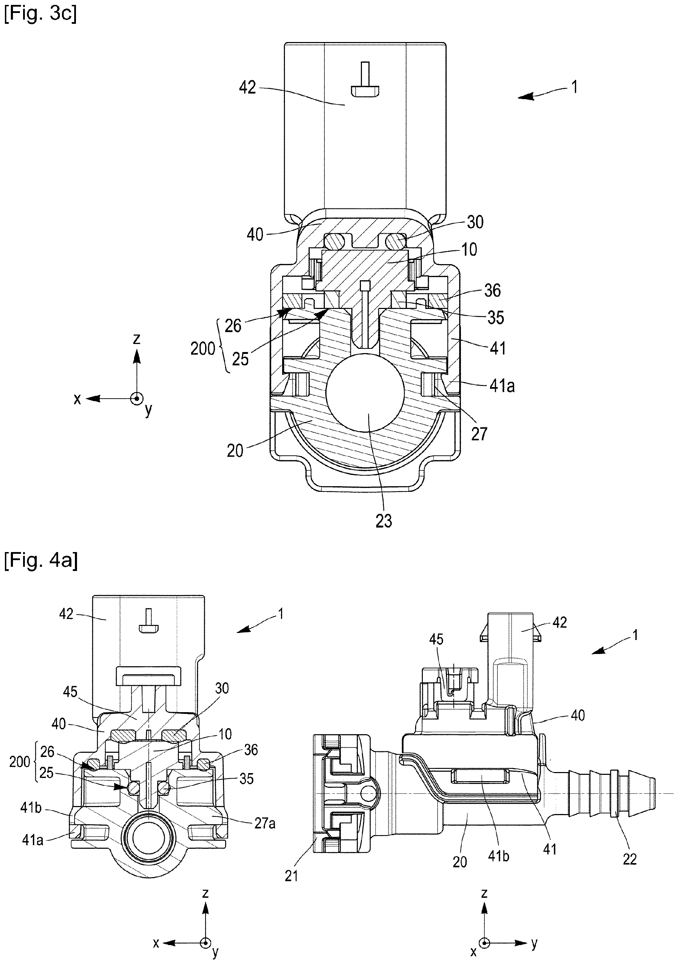

[Fig. 3c] Les figures 3a, 3b et 3c présentent un connecteur fluidique muni d'un capteur de pression, conforme à un troisième mode de réalisation de la présente invention, respectivement en vue éclatée (fig.3a), en coupe selon un plan longitudinal (y,z) (fig.3b), en coupe selon un plan transversal (x,z) (fig.3c) ;
[Fig.4a]
[Fig.4b]

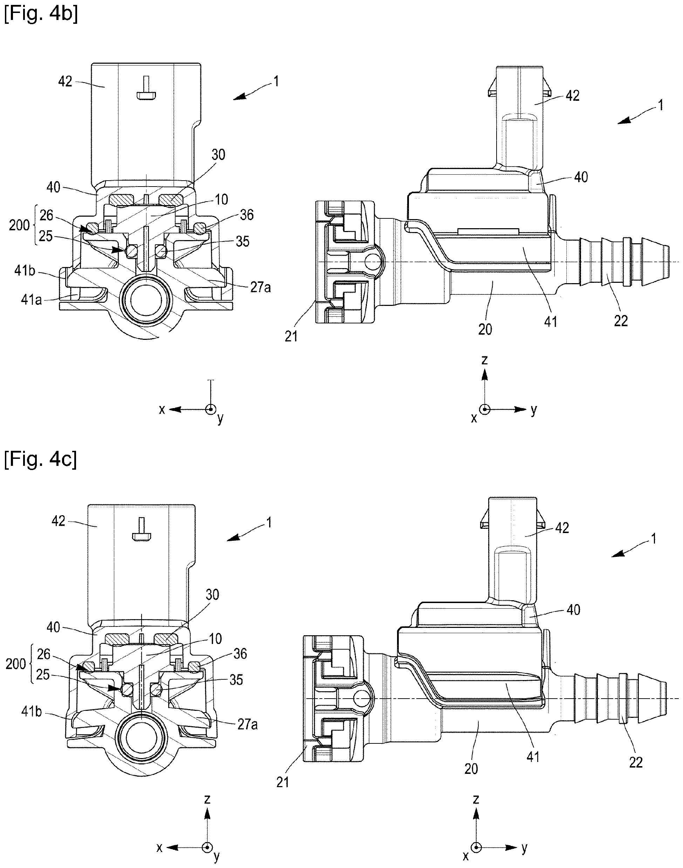

[Fig.4c] les figures 4a, 4b et 4c présentent un connecteur fluidique muni d'un capteur de pression selon un variante de réalisation de la présente invention ; chaque figure comprenant une vue en coupe selon un plan transversal (x,z) et une vue de côté dans un plan longitudinal (y,z).

### DESCRIPTION DETAILLEE DE L'INVENTION

Dans la partie descriptive, les mêmes références sur les figures pourront être utilisées pour des éléments de même type.

La présente invention concerne un connecteur fluidique 1 muni d'un capteur de pression 10, et dont un exemple est illustré sur la figure 1a, en vue éclatée, et sur la figure 1b, en configuration assemblée.

Le connecteur fluidique 1 comprend un corps 20 de forme générale cylindrique et présentant deux embouts de connexion fluidique 21,22. Dans l'exemple représenté, un des embouts de connexion fluidique est un embout de connexion rapide 21, comme cela est connu dans l'état de la technique. En général, l'invention s'applique à tout type d'embout.

Le corps 20, globalement cylindrique, définit un conduit interne 23 dans lequel un fluide est destiné à circuler.

Le connecteur fluidique 1 comprend également une interface d'assemblage 200 aménagée sur et dans le corps 20. Plus particulièrement, l'interface d'assemblage 200 fait partie de la paroi du corps 20 et correspond à des aménagements faits sur et dans cette paroi.

L'interface d'assemblage 200 comprend un orifice 24 traversant de part en part la paroi du corps 20 et mettant en communication le conduit interne 23 et l'extérieur du corps 20. Elle comprend également une première zone d'accueil 25 s'étendant autour de l'orifice 24 et une deuxième zone d'accueil 26 s'étendant autour de la première zone d'accueil 25. Ces zones d'accueil 25,26 définissent des surfaces annulaires planes ou inclinées, préférentiellement concentriques, comme cela sera apparent lors de la description de différents modes de réalisation. Elles sont ainsi nommées car elles procurent respectivement un emplacement pour accueillir un premier 35 et un deuxième 36 joints d'étanchéité. En outre, la première zone d'accueil 25 assure un point de contact, via le premier joint d'étanchéité 35, avec un autre élément (le capteur de pression 10) du connecteur 1, lequel contact garantit une liaison étanche entre ledit élément et le corps 20 ; et la deuxième zone d'accueil 26 assure un point de contact, via le deuxième joint d'étanchéité 36, avec un autre élément (un capot 40) du connecteur 1, lequel contact garantit une liaison étanche entre ledit élément et le corps 20.

L'interface d'assemblage 200 comprend enfin des régions de fixation 27. Comme cela est illustré sur la figure 1c, ces régions de fixation 27 sont situées sur le pourtour du corps 20, de part et d'autre de la deuxième zone d'accueil 26.

Le connecteur fluidique 1 comprend aussi le capteur de pression 10 énoncé précédemment. Ce capteur 10 comporte un cylindre de liaison 11 qui permet d'amener le fluide vers une cellule de mesure de la pression. Le cylindre de liaison 11 est disposé dans ou en vis-à-vis de l'orifice 24. Avantageusement, il forme une protubérance qui s'étend dans l'orifice 24, affleurant le conduit interne 23 ou dépassant sensiblement dans ce dernier. Alternativement, le cylindre de liaison 11 peut uniquement consister en une ouverture mettant en communication le fluide et la cellule de mesure de la pression.

Le capteur de pression 10 comporte également un circuit imprimé, par exemple de type PCB (« Printed Circuit Board » selon la dénomination anglo-saxonne) supportant l'électronique et les bornes de connexion électrique 12 du capteur 10.

Le capteur de pression 10 établit un contact avec la première zone d'accueil 25 par l'intermédiaire du premier joint d'étanchéité 35, pour assurer une étanchéité entre le conduit interne 23 et l'extérieur du corps 20. Le premier joint d'étanchéité 35 peut présenter des formes diverses, pour s'adapter à la première zone d'accueil 25 ; préférentiellement, il est formé en matériau élastomère. Alternativement, le joint 35 peut être formé par une bande de colle : dans ce cas, le capteur de pression 10 devient solidaire du corps 20.

Selon un premier mode de réalisation illustré sur les figures 1a à 1e, la première zone d'accueil 25 comprend un logement coaxial à l'orifice 24 et le cylindre de liaison 11 forme une protubérance qui s'étend dans ledit logement. Le premier joint d'étanchéité 35 est placé dans le logement et autour de la protubérance pour assurer une étanchéité radiale entre le conduit interne 23 et l'extérieur du corps 20. C'est la compression radiale du joint 35 contre les surfaces planes et verticales (c'est-à-dire parallèles ou tangentes au plan (y,z) sur les figures) respectivement du logement de la première zone d'accueil 25 et de la protubérance du cylindre de liaison 11, qui garantit l'étanchéité.

Selon un deuxième mode de réalisation, illustré sur les figures 2a, 2b et 2c, la première zone d'accueil 25 comprend un évasement conique en continuité de l'orifice 24. Le capteur de pression 10 comporte un épaulement et le premier joint d'étanchéité 35 est placé dans l'évasement conique et contre l'épaulement pour assurer l'étanchéité entre le conduit interne 23 et l'extérieur du corps 20. Ici, c'est la compression axiale et radiale du joint 35 contre la surface inclinée de l'évasement de la première zone d'accueil 25 et contre le coin formé par l'épaulement du capteur 10, qui garantit l'étanchéité.

Selon un troisième mode de réalisation, illustré sur les figures 3a, 3b et 3c, le capteur de pression 10 comporte un épaulement et le premier joint d'étanchéité 35 est placé contre ledit épaulement ; il est comprimé par le capteur de pression 10 pour assurer une étanchéité axiale entre le conduit interne 23 et l'extérieur du corps 20. C'est la compression axiale du joint 35 contre les surfaces planes et horizontales (parallèles au plan (x,y) sur les figures) respectivement de la première zone d'accueil 25 et de l'épaulement du capteur 10, qui garantit l'étanchéité.

Revenant à la description générale de l'invention, le connecteur fluidique 1 comprend enfin un capot 40 disposé sur le capteur de pression 10. Le capot 40 établit un contact avec la deuxième zone d'accueil 26 par l'intermédiaire du deuxième joint d'étanchéité 36, pour isoler le capteur de pression 10 de l'environnement extérieur (en particulier, de l'humidité, de la poussière, etc). Pour cela, la deuxième zone d'accueil 26 entoure totalement l'espace occupé par le capteur 10 sur le corps 20, et le capot 40 enserre totalement le capteur 10.

Notons que dans le cas d'un capteur de pression relative, un système de ventilation 45 est aménagé dans le capot 40, pour donner accès à la pression extérieure, comme cela est illustré sur la figure 4a.

Le capot 40 comprend en outre deux ailes latérales 41 s'étendant au moins en partie autour du corps 20 pour coopérer avec les régions de fixation 27 et permettre l'assemblage du capot 40 sur le corps 20. La configuration des ailes latérales 41, qui permet au capot 40 de chevaucher le corps 20, favorise la tenue mécanique du capot 40 sur le corps 20 et ainsi la robustesse du connecteur 1 ; elle réduit également l'encombrement lié à l'intégration du capteur de pression 10 et procure un connecteur 1 fonctionnalisé et compact. En outre, cette configuration protège efficacement de la poussière l'électronique du capteur 10.

Plusieurs modes d'assemblage du capot 40 sur le corps 20 peuvent être utilisés ; par exemple, les deux ailes latérales 41 peuvent être clipsées, collées ou soudées sur les régions de fixation 27.

Dans le cas particulier d'un assemblage par clip, chaque aile latérale 41 comporte avantageusement au moins une dent 41a à son extrémité et chaque région de fixation 27 comporte au moins une rainure pour permettre le clipsage de l'une sur l'autre (figures 1c, 2c, 3c). De manière encore avantageuse, la dent 41a de chaque aile latérale 41 présente un profil progressif et/ou chaque aile latérale 41 présente une bordure inclinée à son extrémité (figure 1d), pour permettre une déformation élastique progressive du capot 40 lors du montage de celui-ci sur le corps 20, jusqu'à son assemblage par clispage.

Bien sûr, chaque aile latérale 41 pourra comporter au moins une rainure ou une fenêtre 41b (à la place ou en plus de la dent 41a) à son extrémité et chaque région de fixation 27 pourra comporter au moins une dent 27a pour permettre le clipsage de l'une sur l'autre; des exemples d'une telle variante sont présentés sur les figures 4a, 4b et 4c.

Comme cela est illustré sur la figure 1d, le corps 20 pourra avantageusement comprendre un bourrelet 29 le long de la bordure des ailes latérales 41, pour bloquer l'accès à la région de fixation 27 et empêcher le démontage du connecteur 1.

Lorsque l'assemblage est fait par clipsage, le deuxième joint d'étanchéité 36 est avantageusement un joint en matériau élastomère, torique ou d'une autre forme adaptée à la deuxième zone d'accueil 26. Dans l'exemple illustré sur la figure 1e, le deuxième joint d'étanchéité 36 aura une forme sensiblement carrée ou rectangulaire, à l'identique des contours du capot 40 (et de la deuxième zone d'accueil 26, non visible sur la figure) .

Dans le cas d'un assemblage par collage, l'extrémité de chaque aile latérale 41 peut être collée sur une région de fixation 27 associée. Selon une autre option, tous les bords du capot 40 en contact avec le corps 20 peuvent être collés audit corps 20 par une bande adhésive continue périphérique ; le deuxième joint d'étanchéité 36 peut alors comprendre ou consister en ladite bande de matière adhésive.

Dans le cas d'un assemblage par soudage, l'extrémité de chaque aile latérale 41 peut être soudée sur une région de fixation 27 associée. Selon une autre option, tous les bords du capot 40 en contact avec le corps 20 peuvent être soudés audit corps 20, formant un cordon de soudure continu périphérique ; le deuxième joint d'étanchéité 36 peut alors comprendre ou consister en ce cordon de soudure.

Dans le cas particulier où le corps 20 présente une région de rétrécissement du diamètre au niveau de l'un des embouts de connexion fluidique, par exemple au niveau de l'embout 22 comme illustré sur les figures 1a et 1b, le capot 40 peut comprendre une aile transverse 44 prenant appui sur la région de rétrécissement. Cette aile transverse 44 renforce la tenue mécanique du capot 40 sur le corps 20.

Le capot 40 du connecteur fluidique 1 selon l'invention comprend enfin un embout de connexion électrique 42 pour raccorder le capteur de pression 10 à l'extérieur. En particulier, des broches métalliques 43 reliées aux bornes de connexion électrique 12 du capteur 10, débouchent et s'étendent dans l'embout de connexion électrique 42. La liaison entre les bornes 12 et les broches 43 peut être assurée par des contacts à ressort ou alternativement par une soudure conductrice. Les contacts à ressort sont particulièrement avantageux car ils permettent d'ajuster le positionnement du PCB (du capteur 10) et du cylindre de liaison 11 qui doit rentrer dans l'orifice 24 ; globalement, ils relâchent les contraintes de dimensionnement des pièces et assurent une meilleure tenue aux vibrations et aux chocs.

Les broches 43 peuvent être surmoulées ou montées en force dans le capot 40. Elles permettent le raccordement du capteur 10, par exemple à un contrôleur extérieur.

Selon une variante amenant une flexibilité de montage et conférant une modularité au connecteur fluidique 1, le capot 40 peut présenter une forme symétrique par rapport à un plan longitudinal (y,z) passant par l'axe central y du conduit interne 23 et par le centre de l'orifice 24. L'interface d'assemblage 200 est également aménagée de manière symétrique selon ce même plan longitudinal (y,z). Cette forme symétrique autorise que l'ensemble formé par le capot 40 et le capteur de pression 10 soit monté sur le corps 20 avec l'embout de connexion électrique 42, soit placé du côté du premier embout 21, soit placé du côté du deuxième embout 22 du connecteur fluidique 1.

Notons que, pour faciliter l'assemblage du connecteur 1, on peut également prévoir une interface d'assemblage 200 comprenant au moins un ergot de centrage 28, pour aider à positionner le capteur de pression 10 et/ou le capot 40 sur le corps 20 (figures 1a, 2a, 3a) .

Le connecteur fluidique 1 comprend un élément élastique 30 pour assurer le maintien mécanique du capteur 10, c'est-à-dire pour le maintenir calé entre le capot 40 et le corps 20, tout en compensant les variations dimensionnelles et les jeux de montage lors de l'assemblage, notamment par clipsage. En particulier, le circuit imprimé du capteur de pression 10 peut présenter des épaisseurs non uniformes et/ou non reproductibles d'un capteur à l'autre : il est donc avantageux de disposer d'un élément élastique 30 pour accommoder ces tolérances et garantir en toute circonstance que le capteur 10 est plaqué entre capot 40 et corps 20 en même temps, et ce sans altérer la calibration du capteur 10.

L'élément élastique 30 procure également l'avantage d'absorber les potentielles vibrations transmises soit par le corps 20, soit par l'embout de connexion électrique 42 du capot 40, en jouant le rôle d'amortisseur. Le connecteur fluidique 1 peut ainsi être compact, sans nécessiter des renforcements par ajouts de matière, quelles que soient les fréquences de vibration rencontrées.

Un tel élément élastique 30 peut être disposé entre le capot 40 et une face du capteur de pression 10 (l'unique contact entre le capot 40 et le capteur 10 étant établi via l'élément élastique 30), l'autre face du capteur 10 étant en contact avec le corps 20, comme cela est par exemple illustré sur les figures 1b, 1c, 2b, 2c.

Selon un mode de réalisation ne faisant pas partie de l'invention, il peut être disposé entre une face du capteur de pression 10 et le corps 20, l'autre face du capteur 10 étant en contact avec le capot 40. Dans le troisième mode de réalisation illustré sur les figures 3a à 3c et décrivant une configuration du premier joint d'étanchéité 35 assurant une étanchéité axiale, une option ne faisant pas partie de l'invention est que ledit premier joint 35 joue le rôle de l'élément élastique, du fait de sa disposition entre la face inférieure du capteur 10 et une surface du corps 20 (la première zone d'accueil 25) parallèle à ladite face inférieure : l'élément élastique 30 illustré sur les figures 3a, 3b et 3c devient alors optionnel.

A titre d'exemple, l'élément élastique 30 peut être formé d'un ressort ou d'un matériau de type élastomère.

En général, lorsqu'ils sont formés d'un matériau élastomère, l'élément élastique 30, le premier joint d'étanchéité 35 et/ou le deuxième joint d'étanchéité 36 peuvent être surmoulés sur le capot 40 ou sur le corps 20, ou rapportés contre le capot 40 ou contre le corps 20.

De même, au moins l'un parmi ces trois éléments 30,35,36 ou les trois peuvent présenter une forme annulaire particulière, configurée pour réduire les efforts de compression lors de l'assemblage du capot 40 sur le corps 20. Par exemple, la forme annulaire peut présenter une section dont une portion centrale est amincie, ce qui limite la résistance à l'écrasement de l'élément élastique 30 et/ou des joints 35,36.

La structure particulière du connecteur fluidique 1 selon la présente invention lui confère modularité, robustesse et compacité. En particulier, la coopération entre le capot 40 et l'interface d'assemblage 200 permet de limiter grandement l'encombrement, tout en maintenant efficacement le capteur de pression 10 et en le protégeant de l'environnement extérieur.

Il est envisageable que le capteur de pression 10 soit solidarisé (par exemple par collage) au capot 40 ou au corps 20 (le capteur de pression 10 solidarisé par collage au capot 40 ne faisant pas partie de l'invention). Notons que dans le cas où il est solidarisé au corps 20, cela procure une sécurité additionnelle contre le risque de fuite du fluide s'écoulant dans le conduit interne 23, en cas d'arrachement accidentel du capot 40. En effet, le capteur de pression 10 solidaire du corps 20 fait office de bouchon de sécurité du fait de sa coopération avec la première zone d'accueil 25 via le premier joint d'étanchéité 35.

Bien entendu, l'invention n'est pas limitée aux modes de mise en œuvre et exemples décrits, et on peut y apporter des variantes de réalisation sans sortir du cadre de l'invention tel que défini par les revendications.

## Revendications

1. Connecteur fluidique (1) comprenant :
- un corps (20) de forme générale cylindrique, présentant deux embouts de connexion fluidique (21,22) et définissant un conduit interne (23) dans lequel un fluide est destiné à circuler,
- une interface d'assemblage (200) aménagée sur et dans le corps (20), comprenant un orifice (24) mettant en communication le conduit interne (23) et l'extérieur du corps, une première zone d'accueil (25) s'étendant autour de l'orifice (24), une deuxième zone d'accueil (26) s'étendant autour de la première zone d'accueil (25), et des régions de fixation (27),
- un capteur de pression (10) comprenant un cylindre de liaison (11) disposé dans ou en vis-à-vis de l'orifice (24), le capteur de pression (10) établissant un contact avec la première zone d'accueil (25) par l'intermédiaire d'un premier joint d'étanchéité (35), pour assurer une étanchéité entre le conduit interne (23) et l'extérieur du corps (20),
- un capot (40) disposé sur le capteur de pression (10) et établissant un contact avec la deuxième zone d'accueil (26) par l'intermédiaire d'un deuxième joint d'étanchéité (36) pour isoler le capteur de pression (10) de l'environnement extérieur, le capot (40) comprenant en outre un embout de connexion électrique (42) pour raccorder le capteur de pression (10),
le connecteur fluidique étant **caractérisé en ce que** le capot comprend deux ailes latérales (41) s'étendant au moins en partie autour du corps (20), de sorte que le capot (40) chevauche le corps (20), pour coopérer avec les régions de fixation (27) et permettre l'assemblage du capot (40) sur le corps (20),
et **en ce qu'**il comprend un élément élastique (30) disposé entre le capot (40) et une face du capteur de pression (10), l'autre face du capteur de pression (10) étant en contact avec le corps (20), un unique contact entre le capot (40) et le capteur (10) étant établi via l'élément élastique (30).

2. Connecteur fluidique (1) selon la revendication précédente, dans lequel :
- la première zone d'accueil (25) comprend un logement coaxial à l'orifice (24), et
- le cylindre de liaison (11) forme une protubérance qui s'étend dans le logement, le premier joint d'étanchéité (35) étant placé dans le logement et autour de la protubérance pour assurer une étanchéité radiale entre le conduit interne (23) et l'extérieur du corps (20).

3. Connecteur fluidique (1) selon la revendication 1, dans lequel :
- la première zone d'accueil (25) comprend un évasement conique en continuité de l'orifice (24) et,
- le capteur de pression (10) comporte un épaulement, le premier joint d'étanchéité (35) étant placé dans l'évasement conique et contre l'épaulement pour assurer une étanchéité entre le conduit interne (23) et l'extérieur du corps (20).

4. Connecteur fluidique (1) selon la revendication 1, dans lequel le capteur de pression (10) comporte un épaulement, le premier joint d'étanchéité (35) étant placé contre l'épaulement et comprimé par le capteur de pression (10) pour assurer une étanchéité axiale entre le conduit interne (23) et l'extérieur du corps (20).

5. Connecteur fluidique (1) selon l'une des revendications précédentes, dans lequel le premier (35) et/ou le deuxième (36) joint d'étanchéité présente(nt) une forme annulaire configurée pour réduire les efforts de compression lors de l'assemblage du capot (40) sur le corps (20).

6. Connecteur fluidique (1) selon la revendication précédente, dans lequel la forme annulaire du joint (35,36) présente une section dont une portion centrale est amincie.

7. Connecteur fluidique (1) selon l'une des revendications précédentes, dans lequel les deux ailes latérales (41) sont clipsées sur les régions de fixation (27).

8. Connecteur fluidique (1) selon la revendication précédente, dans lequel chaque aile latérale (41) comporte au moins une dent (41a) à son extrémité et chaque région de fixation (27) comporte au moins une rainure pour permettre le clipsage de l'une sur l'autre, lorsque les deux ailes latérales (41) sont clipsées sur les régions de fixation (27) .

9. Connecteur fluidique (1) selon la revendication précédente, dans lequel la dent (41a) de chaque aile latérale (41) présente un profil progressif et/ou chaque aile latérale (41) présente une bordure inclinée à son extrémité, pour permettre un clipsage progressif du capot (40) sur le corps (20) .

10. Connecteur fluidique (1) selon l'une des revendications 1 à 6, dans lequel les deux ailes latérales (41) sont collées ou soudées sur les régions de fixation (27) .

11. Connecteur fluidique (1) selon la revendication précédente, dans lequel le deuxième joint d'étanchéité (36) comprend une bande de matière adhésive lorsque les deux ailes latérales (41) sont collées sur les régions de fixation (27), ou un cordon de soudure lorsque les deux ailes latérales (41) sont soudées sur les régions de fixation (27).

12. Connecteur fluidique (1) selon l'une des revendications précédentes, dans lequel le capot (40) et l'interface d'assemblage (200) présentent une forme symétrique par rapport à un plan longitudinal passant par un axe central (y) du conduit interne (23) et par un centre de l'orifice (24).

13. Connecteur fluidique (1) selon l'une des revendications précédentes, dans lequel le corps (20) présente une région de rétrécissement du diamètre au niveau de l'un des embouts de connexion fluidique (22), et dans lequel le capot (40) comprend une aile transverse (44) prenant appui sur la région de rétrécissement.

14. Connecteur fluidique (1) selon l'une des revendications précédentes, dans lequel le capteur de pression (10) comprend des bornes de connexion électrique (12) reliées à des broches (43) débouchant dans l'embout de connexion électrique (42).

15. Connecteur fluidique (1) selon la revendication précédente, dans lequel les broches (43) sont surmoulées ou montées en force dans le capot (40).

16. Connecteur fluidique (1) selon l'une des deux revendications précédentes, dans lequel la liaison entre les bornes de connexion électrique (12) et les broches (43) est assurée par des contacts à ressort.

17. Connecteur fluidique (1) selon l'une des revendications précédentes, dans lequel l'élément élastique (30) est formé d'un ressort ou d'un matériau élastomère.

18. Connecteur fluidique (1) selon l'une des revendications précédentes, dans lequel l'élément élastique (30) est surmoulé sur le capot (40) ou sur le corps (20), ou rapporté contre le capot (40) ou contre le corps (20).

19. Connecteur fluidique (1) selon l'une des revendications précédentes, dans lequel le capteur de pression (10) est solidarisé au capot (40) ou au corps (20).

## Patentansprüche

1. Fluidverbinder (1), umfassend:
- einen Körper (20) mit allgemein zylindrischer Form, der zwei Fluidverbindungsansätze (21, 22) vorweist und einen inneren Kanal (23) definiert, in dem ein Fluid dazu bestimmt ist, zu zirkulieren,
- eine Montageschnittstelle (200), die an und in dem Körper (20) eingerichtet ist, umfassend eine Öffnung (24), die den inneren Kanal (23) und die Außenseite des Körpers in Verbindung bringt, einen ersten Aufnahmebereich (25), der sich um die Öffnung (24) herum erstreckt, einen zweiten Aufnahmebereich (26), der sich um den ersten Aufnahmebereich (25) herum erstreckt, und Befestigungsbereiche (27),
- einen Drucksensor (10), umfassend einen Verknüpfungszylinder (11), der in oder gegenüber der Öffnung (24) angeordnet ist, wobei der Drucksensor (10) über eine erste Dichtung (35) Kontakt mit dem ersten Aufnahmebereich (25) herstellt, zum Sicherstellen einer Abdichtung zwischen dem inneren Kanal (23) und der Außenseite des Körpers (20),
- eine Abdeckung (40), die an dem Drucksensor (10) angeordnet ist und über eine zweite Dichtung (36) Kontakt mit dem zweiten Aufnahmebereich (26) zum Isolieren des Drucksensors (10) von der Außenumgebung herstellt, die Abdeckung (40) umfassend ferner einen Ansatz (42) für eine elektrische Verbindung zum Anschließen des Drucksensors (10),
wobei der Fluidverbinder **dadurch gekennzeichnet ist, dass** die Abdeckung zwei Seitenflügel (41) umfasst, die sich mindestens teilweise um den Körper (20) herum erstrecken, so dass die Abdeckung (40) den Körper (20) überlappt, zum Zusammenwirken mit den Befestigungsbereichen (27) und Ermöglichen der Montage der Abdeckung (40) an dem Körper (20),
und dass er ein elastisches Element (30) umfasst, das zwischen der Abdeckung (40) und einer Fläche des Drucksensors (10) angeordnet ist, wobei die andere Fläche des Drucksensors (10) mit dem Körper (20) in Kontakt steht, wobei ein einziger Kontakt zwischen der Abdeckung (40) und dem Sensor (10) über das elastische Element (30) hergestellt wird.

2. Fluidverbinder (1) nach dem vorstehenden Anspruch, wobei:
- der erste Aufnahmebereich (25) ein Gehäuse koaxial zu der Öffnung (24) umfasst, und
- der Verknüpfungszylinder (11) einen Vorsprung ausbildet, der sich in dem Gehäuse erstreckt, wobei die erste Dichtung (35) in dem Gehäuse und um den Vorsprung herum zum Sicherstellen einer radialen Abdichtung zwischen dem inneren Kanal (23) und der Außenseite des Körpers (20) platziert ist.

3. Fluidverbinder (1) nach Anspruch 1, wobei:
- der erste Aufnahmebereich (25) eine konische Verbreiterung in Fortsetzung der Öffnung (24) umfasst und,
- der Drucksensor (10) eine Schulter aufweist, wobei die erste Dichtung (35) in der konischen Verbreiterung und gegen die Schulter zum Sicherstellen einer Abdichtung zwischen dem inneren Kanal (23) und der Außenseite des Körpers (20) platziert ist.

4. Fluidverbinder (1) nach Anspruch 1, wobei der Drucksensor (10) eine Schulter aufweist, wobei die erste Dichtung (35) gegen die Schulter platziert ist und durch den Drucksensor (10) zum Sicherstellen einer axialen Abdichtung zwischen der inneren Leitung (23) und der Außenseite des Körpers (20) zusammengedrückt wird.

5. Fluidverbinder (1) nach einem der vorstehenden Ansprüche, wobei die erste (35) und/oder die zweite (36) Dichtung eine ringförmige Form vorweist/vorweisen, die zum Reduzieren der Druckkräfte bei der Montage der Abdeckung (40) an dem Körper (20) konfiguriert ist.

6. Fluidverbinder (1) nach dem vorstehenden Anspruch, wobei die ringförmige Form der Dichtung (35, 36) einen Querschnitt vorweist, dessen Mittelabschnitt verjüngt ist.

7. Fluidverbinder (1) nach einem der vorstehenden Ansprüche, wobei die zwei Seitenflügel (41) auf die Befestigungsbereiche (27) aufgeklipst sind.

8. Fluidverbinder (1) nach dem vorstehenden Anspruch, wobei jeder Seitenflügel (41) mindestens einen Zahn (41a) an seinem Ende aufweist und jeder Befestigungsbereich (27) mindestens eine Nut zum Ermöglichen des Aufklipsens des einen auf dem anderen aufweist, wenn die zwei Seitenflügel (41) auf die Befestigungsbereiche (27) aufgeklipst sind.

9. Fluidverbinder (1) nach dem vorstehenden Anspruch, wobei der Zahn (41a) jedes Seitenflügels (41) ein progressives Profil vorweist und/oder jeder Seitenflügel (41) einen schrägen Rand an seinem Ende aufweist, zum Ermöglichen eines progressiven Aufklipsens der Abdeckung (40) auf den Körper (20).

10. Fluidverbinder (1) nach einem der Ansprüche 1 bis 6, wobei die zwei Seitenflügel (41) an den Befestigungsbereichen (27) angeklebt oder angeschweißt sind.

11. Fluidverbinder (1) nach dem vorstehenden Anspruch, wobei die zweite Dichtung (36) einen Streifen aus Klebematerial, wenn die zwei Seitenflügel (41) an den Befestigungsbereichen (27) angeklebt sind, oder eine Schweißnaht umfasst, wenn die zwei Seitenflügel (41) an den Befestigungsbereichen (27) angeschweißt sind.

12. Fluidverbinder (1) nach einem der vorstehenden Ansprüche, wobei die Abdeckung (40) und die Montageschnittstelle (200) eine symmetrische Form in Bezug auf eine Längsebene vorweisen, die durch eine Mittelachse (y) des inneren Kanals (23) und durch eine Mitte der Öffnung (24) verläuft.

13. Fluidverbinder (1) nach einem der vorstehenden Ansprüche, wobei der Körper (20) einen Verengungsbereich des Durchmessers an einem der Fluidverbindungsansätze (22) aufweist, und wobei die Abdeckung (40) einen Querflügel (44) umfasst, der an dem Verengungsbereich anliegt.

14. Fluidverbinder (1) nach einem der vorstehenden Ansprüche, wobei der Drucksensor (10) Anschlüsse (12) für die elektrische Verbindung umfasst, die mit Stiften (43) verknüpft sind, die in den Ansatz (42) für die elektrische Verbindung münden.

15. Fluidverbinder (1) nach dem vorstehenden Anspruch, wobei die Stifte (43) umspritzt oder in der Abdeckung (40) gewaltsam angebracht sind.

16. Fluidverbinder (1) nach einem der zwei vorstehenden Ansprüche, wobei die Verbindung zwischen den Anschlüssen (12) für die elektrische Verbindung und den Stiften (43) durch Federkontakte sichergestellt wird.

17. Fluidverbinder (1) nach einem der vorstehenden Ansprüche, wobei das elastische Element (30) aus einer Feder oder aus einem elastomeren Material ausgebildet ist.

18. Fluidverbinder (1) nach einem der vorstehenden Ansprüche, wobei das elastische Element (30) auf die Abdeckung (40) oder auf den Körper (20) umspritzt oder gegen die Abdeckung (40) oder gegen Körper (20) aufgesteckt ist.

19. Fluidverbinder (1) nach einem der vorstehenden Ansprüche, wobei der Drucksensor (10) mit der Abdeckung (40) oder mit dem Körper (20) fest verbunden ist.

## Claims

1. Fluid connector (1) comprising:
- a body (20) which is generally cylindrical in shape, having two fluid connection end pieces (21, 22) and defining an internal duct (23) in which a fluid is intended to circulate,
- an assembly interface (200) arranged on and in the body (20), comprising an orifice (24) which puts the internal duct (23) in communication with the outside of the body, a first receiving area (25) extending around the orifice (24), a second receiving area (26) extending around the first receiving area (25), and attachment regions (27),
- a pressure sensor (10) which comprises a connecting cylinder (11) arranged in or opposite the orifice (24), the pressure sensor (10) establishing contact with the first receiving area (25) via a first gasket (35) to provide a seal between the internal duct (23) and the outside of the body (20),
- a cover (40) arranged on the pressure sensor (10) and establishing contact with the second receiving area (26) via a second gasket (36) to insulate the pressure sensor (10) from the outside environment, the cover (40) further comprising an electrical connection end piece (42) for connecting the pressure sensor (10),
the fluid connector being **characterized in that** the cover comprises two side wings (41) extending at least partly around the body (20), such that the cover (40) overlaps the body (20), to engage with the attachment regions (27) and allow the cover (40) to be assembled on the body (20),
and **in that** it comprises a resilient element (30) arranged between the cover (40) and one face of the pressure sensor (10), the other face of the pressure sensor (10) being in contact with the body (20), a single contact between the cover (40) and the sensor (10) being established via the resilient element (30).

2. Fluid connector (1) according to the preceding claim, wherein:
- the first receiving area (25) comprises a housing which is coaxial with the orifice (24), and
- the connecting cylinder (11) forms a projection which extends in the housing, the first gasket (35) being placed in the housing and around the projection in order to provide a radial seal between the internal duct (23) and the outside of the body (20).

3. Fluid connector (1) according to claim 1, wherein:
- the first receiving area (25) comprises a conical widening in continuity with the orifice (24), and
- the pressure sensor (10) comprises a shoulder, the first gasket (35) being placed in the conical widening and against the shoulder to provide a seal between the internal duct (23) and the outside of the body (20).

4. Fluid connector (1) according to claim 1, wherein the pressure sensor (10) comprises a shoulder, the first gasket (35) being placed against the shoulder and compressed by the pressure sensor (10) to provide an axial seal between the internal duct (23) and the outside of the body (20).

5. Fluid connector (1) according to one of the preceding claims, wherein the first gasket (35) and/or the second gasket (36) have an annular shape which is configured to reduce the compressive forces during the assembly of the cover (40) on the body (20).

6. Fluid connector (1) according to the preceding claim, wherein the annular shape of the gasket (35, 36) has a cross section of which a central portion is thinned.

7. Fluid connector (1) according to one of the preceding claims, wherein the two side wings (41) are clipped to the attachment regions (27).

8. Fluid connector (1) according to the preceding claim, wherein each side wing (41) comprises at least one tooth (41a) at the end thereof and each attachment region (27) comprises at least one groove to allow the one to be clipped to the other, when the two side wings (41) are clipped to the attachment regions (27).

9. Fluid connector (1) according to the preceding claim, wherein the tooth (41a) of each side wing (41) has a progressive profile and/or each side wing (41) has an inclined edge at the end thereof, in order to allow the progressive clipping of the cover (40) to the body (20).

10. Fluid connector (1) according to one of claims 1 to 6, wherein the two side wings (41) are bonded or welded to the attachment regions (27).

11. Fluid connector (1) according to the preceding claim, wherein the second gasket (36) comprises a strip of adhesive material when the two side wings (41) are bonded to the attachment regions (27), or a weld bead when the two side wings (41) are welded to the attachment regions (27).

12. Fluid connector (1) according to one of the preceding claims, wherein the cover (40) and the assembly interface (200) have a symmetrical shape with respect to a longitudinal plane passing through a central axis (y) of the internal duct (23) and through a center of the orifice (24).

13. Fluid connector (1) according to one of the preceding claims, wherein the body (20) has a region which narrows in diameter at one of the fluid connection end pieces (22), and wherein the cover (40) comprises a transverse wing (44) abutting the narrowing region.

14. Fluid connector (1) according to one of the preceding claims, wherein the pressure sensor (10) comprises electrical connection terminals (12) connected to pins (43) which lead into the electrical connection end piece (42).

15. Fluid connector (1) according to the preceding claim, wherein the pins (43) are overmolded or force-fitted in the cover (40).

16. Fluid connector (1) according to one of the two preceding claims, wherein the connection between the electrical connection terminals (12) and the pins (43) is provided by spring contacts.

17. Fluid connector (1) according to one of the preceding claims, wherein the resilient element (30) is made from a spring or an elastomer material.

18. Fluid connector (1) according to one of the previous claims, wherein the resilient element (30) is overmolded on the cover (40) or on the body (20), or fitted against the cover (40) or against the body (20).

19. Fluid connector (1) according to one of the preceding claims, wherein the pressure sensor (10) is secured to the cover (40) or to the body (20).
